# EUROPEAN PATENT APPLICATION

(11) **EP 4 518 017 A1**
(43) Date of publication of application: **05.03.2025**
(21) Application number: 22953798.0
(22) Date of filing: 29.09.2022
(51) Int. Cl.: H01M 50/593, H01M 50/531

(54) **ADAPTER MEMBER, BATTERY CELL, BATTERY, AND ELECTRICAL DEVICE**

(30) Priority: 05.08.2022 CN 202210935449
(71) Applicant: Jiangsu Contemporary Amperex Technology Limited, Changzhou, Jiangsu 213300 (CN); Contemporary Amperex Technology Co., Limited, Ningde, Fujian 352100 (CN)
(72) Inventor: KE, Haibo, hangzhou, Jiangsu 213300 (CN); LI, Quankun, hangzhou, Jiangsu 213300 (CN)
(74) Representative: Ran, Handong
(86) International application number: PCT/CN2022/122565
(87) International publication number: WO 2024/027005

(57) **Abstract**

Embodiments of the present application provide an adapter member, a battery cell, a battery, and an electrical device, capable of improving the performance of battery cells. An adapter comprises a first connecting part , a second connecting part , and an overload protection part. The first connecting part is configured to be electrically connected to an electrode terminal, the second connecting part is configured to be electrically connected to a tab, the overload protection part is arranged between the first connecting part and the second connecting part, and the second connecting part comprises a tab connecting surface configured to be connected to the tab. A barrier is arranged on a side of the adapter provided with the tab connecting surface and covers at least a part of the overload protection part, and the barrier is configured to prevent, in an insulating manner, electrical connection between the tab and the first connecting part. According to the embodiments of the present application, the barrier is arranged on the side of the adapter provided with the tab connecting surface, so that direct electrical connection after the tab makes direct contact with the first connecting part across the overload protection part is avoided, and the overload protection part on the adapter is prevented from failing, and the reliability of the adapter member is improved.

## Description

### TECHNICAL FIELD

This application relates to the field of battery technologies, and more specifically, to an adapting member, a battery cell, a battery, and an electric apparatus.

### BACKGROUND

With the development of new energy technologies, rechargeable batteries are increasingly widely used in electronic devices such as mobile phones, notebook computers, electric bicycles, electric vehicles, electric airplanes, electric ships, electric toy cars, electric toy ships, electric toy airplanes, and electric tools. In addition, as a part of people's daily life, most electronic devices have high requirements for battery life and safety.

**In** the existing battery technologies, a structural member for electrical connection in a battery cell occupies internal space. Therefore, how the internal space of the battery cell occupied by the structural member is reduced while ensuring safe current transmission is an urgent technical problem to be solved in battery technologies.

### SUMMARY

This application provides an adapting member, a battery cell, a battery, and an electric apparatus, so as to reduce internal space of the battery cell occupied by a structural member while ensuring safe current transmission, thereby improving performance of the battery cell.

According to a first aspect, an embodiment of this application provides an adapting member applied to a battery cell and including an adapter and a blocking member. The adapter includes a first connecting portion, a second connecting portion, and an overload protection portion, where the first connecting portion is configured to be electrically connected to an electrode terminal of the battery cell, the second connecting portion is configured to be electrically connected to a tab of the battery cell, the overload protection portion is disposed between the first connecting portion and the second connecting portion, and the second connecting portion includes a tab connecting surface for connecting the tab. The blocking member is disposed on a side of the adapter having the tab connecting surface and covers at least a portion of the overload protection portion, and the blocking member extends from the overload protection portion toward two sides in a first direction such that the blocking member extends beyond edges of the overload protection portion on two sides in the first direction. The blocking member is configured to insulate and block direct electrical connection between the tab and the first connecting portion. The first direction is a direction along which the first connecting portion and the overload protection portion are disposed side by side.

In the foregoing technical solution, the blocking member is disposed on the side of the adapter having the tab connecting surface, which greatly reduces the probability of direct electrical connection formed after the tab crosses the overload protection portion to come into direct contact with the first connecting portion, and in turn avoids functional failure of the overload protection portion on the adapter, improving reliability of the adapting member and improving safety of the battery cell. In addition, the blocking member is disposed only on the side of the adapter having the tab connecting surface, which reduces the internal space occupied by the blocking member, further increasing energy density of the battery cell.

In some embodiments, a distance by which the blocking member extends beyond the edges of the overload protection portion on two sides in the first direction is D 1, D1 satisfying 0.5 mm to 5 mm. The first direction is the direction along which the first connecting portion and the overload protection portion are disposed side by side.

A greater distance by which the edge of the blocking member extends beyond the overload protection portion means larger space and weight occupied by the blocking member, resulting in higher material costs. A smaller distance by which the edge of the blocking member extends beyond the overload protection portion means lower reliability of the blocking member completely covering the overload protection portion due to the risk of misalignment during actual assembly. If the distance by which the edge of the blocking member extends beyond the overload protection portion is excessively small, the blocking member does not completely cover the overload protection portion, and the tab crosses the overload protection portion toward the first connecting portion due to misalignment, resulting in failure of the overload protection portion. In the foregoing technical solution, the distance by which the edge of the blocking member extends beyond the overload protection portion is limited to 0.5 mm to 5 mm, so as to ensure that the blocking member covers the overload protection portion, controlling overall manufacturing costs and space occupation of the adapting member while avoiding the failure of the overload protection portion.

In some embodiments, in a thickness direction of the blocking member, a projection of the blocking member is located within the adapter, and in a direction perpendicular to the first direction, a distance D2 between edges of a projection of the blocking member on two sides and edges of a projection of the adapter on two sides is 0 mm to 0.2 mm.

The foregoing technical solution can prevent the blocking member from extending out of the adapter, reduce the assembly space occupied by the blocking member, and improve space utilization of other components. Moreover, when the blocking member is adhered to the adapter, D2 being controlled to be 0 mm to 0.2 mm can reduce the risk of adhesive overflow of the blocking member. In addition, a size of edge regions of the overload protection portion and the first connecting portion that are not covered by the blocking member is controlled to be 0 mm to 0.2 mm, which can ensure that the tab is supported by the blocking member with a certain thickness even if the tab crosses the overload protection portion, such that in the thickness direction of the blocking member, there is a gap between the tab and the overload protection portion as well as between the tab and the first connecting portion, further reducing the risk of the tab crossing the overload protection portion to be directly electrically connected to the first connecting portion.

In some embodiments, the adapter has an electrode terminal connecting surface in its thickness direction, the electrode terminal connecting surface and the tab connecting surface being located on a same side of the adapter or on two sides facing away from each other of the adapter respectively; and the blocking member is disposed on the side of the adapter having the tab connecting surface and covers the overload protection portion and at least a portion of the first connecting portion.

In the foregoing technical solution, the blocking member covers at least a portion of the first connecting portion, which can improve the reliability of the blocking member, further reducing the probability of direct contact between the tab and the first connecting portion caused by misalignment or excessive length of the tab.

In some embodiments, the first connecting portion includes an electrode terminal connecting portion, where in the thickness direction, the electrode terminal connecting portion protrudes in a direction approaching the electrode terminal, the electrode terminal connecting surface is a surface of the electrode terminal connecting portion facing the electrode terminal, and the overload protection portion and the electrode terminal connecting portion are spaced apart.

In the foregoing technical solution, the electrode terminal connecting portion allows for better connection between the electrode terminal connecting surface and the electrode terminal, further reducing the rate of poor welding and improving the reliability of connection between the adapter and the electrode terminal. In addition, when the electrode terminal is laser-welded to the adapter, laser reflected can be blocked by grooves formed in the foregoing solution, which reduces the probability of the laser reflected causing damage to other components in the battery cell, improving the safety of the battery cell.

In some embodiments, a minimum distance between the overload protection portion and the electrode terminal connecting portion is 1 mm to 50 mm.

If the distance between the overload protection portion and the electrode terminal connecting portion is excessively small, the blocking member covers an opening formed after the electrode terminal connecting portion protrudes when covering the overload protection portion. The electrode terminal connecting portion and the electrode terminal are welded through the opening of the electrode terminal connecting portion, but interference between the blocking member and the opening affects the yield rate of welding. In addition, the laser scattered during welding also irradiates the blocking member, which causes damage to the blocking member, reducing the reliability of the blocking member. A greater distance between the overload protection portion and the electrode terminal connecting portion means a longer length of the blocking member in the first direction, which in turn means higher material costs required for the blocking member. In the foregoing technical solution, the distance between the overload protection portion and the electrode terminal connecting portion is limited to 1 mm to 50 mm, so as to avoid interference between the overload protection portion and the opening of the electrode terminal connecting portion. In addition, the material costs of the blocking member are reduced.

In some embodiments, the overload protection portion includes a through hole and a fusing portion, where the fusing portion and the through hole are successively distributed along a second direction, and the first direction intersects with the second direction.

In the foregoing technical solution, in the overload protection portion formed by the through hole and the fusing portion, the through hole has a simple manufacturing process, thereby reducing process difficulty of the overload protection portion.

In some embodiments, the overload protection portion has a thinned portion, where the thinned portion extends along a second direction, and the first direction intersects with the second direction.

In the foregoing technical solution, the fusing portion and thinned portion in the overload protection portion jointly provide overload protection. When a sum of cross-sectional areas of the fusing portion and the thinned portion is smaller than that of the first connecting portion and also smaller than that of the second connecting portion, and the current that the fusing portion and the thinned portion can withstand exceeds a threshold, the fusing portion and the thinned portion break, and the current cannot be transferred from the second connecting portion to the first connecting portion. In the foregoing solution, the threshold of the overload protection portion can be adjusted more flexibly by adjusting shape and thickness of the thinned portion.

In some embodiments, thickness H1 of the thinned portion satisfies 0 mm < H1 ≤ 0.5 mm.

A greater thickness of the thinned portion means higher strength of the adapter, higher working current that can pass through the thinned portion, and more heat that the thinned portion can withstand. However, because the thinned portion is a portion of the overload protection portion, the heat that the thinned portion can withstand needs to be reduced, so that the thinned portion can break when the current exceeding a given threshold flows through the thinned portion. In the foregoing technical solution, the thickness H1 of the thinned portion is limited to satisfying 0 mm < H1 ≤ 0.5 mm, which can ensure overall strength of the adapter without functional failure of the overload protection portion. In some embodiments, the blocking member has an avoidance hole, where the avoidance hole is configured to avoid the electrode terminal connecting portion and is disposed corresponding to the electrode terminal connecting portion.

In the foregoing technical solution, the avoidance hole on the blocking member reduces interference in the connection between the electrode terminal connecting portion and the electrode terminal, and protects the overload protection portion on the adapter to the greatest extent, reducing the risk of direct contact between the tab and the electrode terminal connecting portion.

In some embodiments, the overload protection portion is provided in two, where the two overload protection portions are located on two sides of the first connecting portion in the first direction and are connected to the two second connecting portions respectively.

The foregoing technical solution can ensure that there are overload protection portions on both sides of the first connecting portion. In a case that the battery cell includes a plurality of electrode assemblies, when any one of the electrode assemblies experiences a short circuit, the plurality of overload protection portions can disconnect electrical connection of that electrode assembly in a timely manner, improving the safety performance of the battery cell.

In some embodiments, the blocking member is an integral structure, and an orthographic projection of the blocking member on the adapter covers at least the two overload protection portions.

In the foregoing technical solution, the blocking member is the integral structure, which can simplify the assembly of the blocking member, improving assembly efficiency.

In some embodiments, the blocking member is a segmented structure, and the blocking member includes a first sub-portion and a second sub-portion, the first sub-portion and the second sub-portion covering the two overload protection portions respectively.

In the foregoing technical solution, when the blocking member is assembled, the electrode terminal connecting portion has certain requirements for the assembly of the blocking member. The blocking member is divided into two portions, and the two portions do not affect each other, so as to reduce the assembly requirements and the probability of misalignment of the blocking member.

In some embodiments, the adapter further includes a limiting portion, the limiting portion extending along a second direction.

The foregoing technical solution can ensure accurate mounting of the blocking member and the adapter, alleviating the problem of blocking capability failure of the blocking member caused by position offset of the blocking member.

In some embodiments, the blocking member covers at least a portion of a surface of the limiting portion facing the tab connecting surface, and the blocking member does not extend beyond an outer edge of the limiting portion.

The foregoing technical solution can reduce the probability of adhesive overflow and interference with other components caused by the blocking member extending beyond the edge of the adapter.

In some embodiments, the blocking member includes an adhesive layer and a blocking layer that are stacked in a thickness direction of the blocking member, the blocking layer being adhered to the adapter through the adhesive layer.

The foregoing technical solution can effectively enhance connection strength between the blocking member and the adapter, reducing the risk of separation between the blocking member and the adapter.

In some embodiments, thickness of the blocking member is 1 µm to 500 µm.

A greater thickness of the blocking member means higher material costs and larger internal space of the battery cell occupied by the blocking member. A smaller thickness of the blocking member means higher process difficulty and higher manufacturing costs. In the foregoing technical solution, the thickness of the blocking member is limited to 1 µm to 500 µm, so as to balance the process requirements and the cost requirements and further reduce the internal space of the battery cell occupied by the blocking member, further increasing the energy density of the battery cell.

In some embodiments, a thickness ratio of the blocking member to the adapter is 1/10 to 4/5.

The space reserved for the adapting member in the battery cell is relatively fixed. Therefore, if the blocking member is thicker, the adapter is thinner, which reduces overall strength of the adapter. If the blocking member is thinner, the adapter is thicker, which reduces overall strength of the blocking member. In this technical solution, the thickness ratio of the blocking member to the adapter is limited to 1/10 to 4/5, so as to prevent the adapting member from occupying the space of the folded tab structure while balancing the respective strengths of the blocking member and the adapter.

In some embodiments, in a thickness direction of the blocking member, a projection area ratio of the blocking member to the adapter is 1/5 to 4/5.

A larger coverage area of the blocking member on the adapter means higher material costs required for the blocking member. A smaller coverage area of the blocking member on the adapter means poorer blocking effect of the blocking member. In addition, when the blocking member is adhered to the adapter, a smaller area of the blocking member means lower adhesion strength of the blocking member. In the foregoing technical solution, the area ratio of the blocking member to the adapter is limited to 1/5 to 4/5, so as to balance the material costs and the blocking effect of the blocking member.

According to a second aspect, an embodiment of this application provides a battery cell including: a housing provided with an accommodating cavity; an electrode terminal disposed on the housing; an electrode assembly accommodated in the accommodating cavity, the electrode assembly including a body portion and a tab led out of the body portion; and an adapting member, where the adapting member is the adapting member according to any one of the embodiments in the first aspect, the first connecting portion of the adapter is electrically connected to the electrode terminal, and the second connecting portion is electrically connected to the tab.

In some embodiments, the tab connecting surface is located on a surface of the second connecting portion facing the electrode assembly.

In the foregoing technical solution, the blocking member and the tab are both located on a side facing away from the electrode terminal, which is conducive to further reducing the internal space of the battery cell occupied by the blocking member, increasing the energy density of the battery cell.

According to a third aspect, an embodiment of this application provides a battery including a plurality of battery cells according to any one of the embodiments in the second aspect.

According to a fourth aspect, an embodiment of this application provides an electric apparatus including a plurality of battery cells according to any one of the embodiments in the second aspect, where the battery cell is configured to supply electric energy.

This application provides the foregoing adapting member, battery cell, battery, and electric apparatus, so as to reduce internal space of the battery cell occupied by a structural member while ensuring safe current transmission, thereby improving performance of the battery cell.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.
FIG. 1 is a schematic structural diagram of a vehicle according to some embodiments of this application;
FIG. 2 is a schematic exploded view of a battery according to some embodiments of this application;
FIG. 3 is a schematic structural diagram of a battery module shown in FIG. 2;
FIG. 4 is a schematic exploded view of an adapting member according to some embodiments of this application;
FIG. 5 is a schematic structural diagram of the adapting member shown in FIG. 4;
FIG. 6 is a schematic structural diagram of a cross section along A-A in FIG. 5;
FIG. 7 is an enlarged view of a structure of region Q shown in FIG. 6;
FIG. 8 is an enlarged view of a structure of region R shown in FIG. 6;
FIG. 9 is a schematic exploded view of another adapting member according to some embodiments of this application;
FIG. 10 is a schematic exploded view of still another adapting member according to some embodiments of this application;
FIG. 11 is a schematic structural diagram of the adapting member shown in FIG. 10;
FIG. 12 is a schematic structural diagram of a cross section along B-B in FIG. 11; and

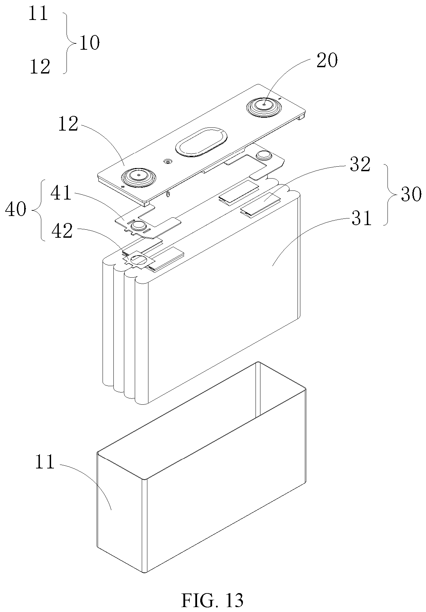

FIG. 13 is a schematic exploded view of a battery cell according to some embodiments of this application.

The accompanying drawings are not drawn to scale.

Reference signs in the specific embodiments are described as follows:
1000. vehicle;
100. battery; 200. controller; 300. motor; 400. box; 401. first box portion; 402. second box portion; 403. accommodating cavity; 500. battery module;
1. battery cell;
10. housing; 11. housing body; 12. end cover;
20. electrode terminal;
30. electrode assembly; 31. body portion; 32. tab;
40. adapting member; 41. adapter; 411. first connecting portion; 411a. electrode terminal connecting surface; 411b. electrode terminal connecting portion; 412. second connecting portion; 412a. tab connecting surface; 413. overload protection portion; 414. thinned portion; 414a. through hole; 415. fusing portion; 416. limiting portion; 417. fool-proofing structure;
42. blocking member; 42a. avoidance hole; 42b. first sub-portion; 42c. second sub-portion; 421. adhesive layer; 422. blocking layer;
X. first direction; and Y. second direction.

### DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application. Apparently, the described embodiments are some but not all of the embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by persons skilled in the art to which this application relates. The terms used in the specification of this application are intended to merely describe the specific embodiments rather than to limit this application. The terms "include", "comprise", and any variations thereof in the specification, claims, and brief description of drawings of this application are intended to cover non-exclusive inclusions. In the specification, claims, or accompanying drawings of this application, the terms "first", "second", and the like are intended to distinguish between different objects rather than to describe a particular order or a primary-secondary relationship.

In this application, reference to "embodiment" means that specific features, structures, or characteristics described with reference to the embodiment may be incorporated in at least one embodiment of this application. The word "embodiment" appearing in various places in this specification does not necessarily refer to the same embodiment or an independent or alternative embodiment that is exclusive of other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection; and a direct connection, an indirect connection via an intermediate medium, or an internal communication between two elements. Persons of ordinary skill in the art can understand specific meanings of these terms in this application as appropriate to specific situations.

The term "and/or" in this application is only an associative relationship for describing associated objects, indicating that three relationships may be present. For example, A and/or B may indicate the following three cases: presence of only A; presence of both A and B; and presence of only B. In addition, the character "/" in this application generally indicates an "or" relationship between the contextually associated objects.

In the embodiments of this application, the same reference signs denote the same components. For brevity, in different embodiments, detailed descriptions of the same components are not repeated. It should be understood that as shown in the accompanying drawings, sizes such as thickness, length, and width of various components and sizes such as thickness, length, and width of integrated devices in the embodiments of this application are merely for illustrative purposes and should not constitute any limitations on this application.

In this application, "a plurality of" means more than two (inclusive).

In this application, a battery cell may include a lithium-ion secondary battery cell, a lithium-ion primary battery cell, a lithium-sulfur battery cell, a sodium-lithium-ion battery cell, a sodium-ion battery cell, a magnesium-ion battery cell, or the like. This is not limited in the embodiments of this application. The battery cell may be cylindrical, flat, cuboid, or of other shapes. This is not limited in the embodiments of this application either. Battery cells are typically categorized into three types by packaging method: cylindrical battery cell, prismatic battery cell, and pouch battery cell. This is not limited in the embodiments of this application either.

The battery mentioned in the embodiments of this application is a single physical module that includes one or more battery cells for providing a higher voltage and capacity. A battery typically includes a box configured to enclose one or more battery cells. The box can prevent a liquid or another foreign matter from affecting charging or discharging of the battery cells.

The battery cell includes an electrode assembly and an electrolyte. The electrode assembly includes a positive electrode plate, a negative electrode plate, and a separator. The battery cell mainly relies on migration of metal ions between the positive electrode plate and the negative electrode plate to work. The positive electrode plate includes a positive electrode current collector and a positive electrode active substance layer. The positive electrode active substance layer is applied on a surface of the positive electrode current collector. The positive electrode current collector includes a positive electrode coated region and a positive tab connected to the positive electrode coated region. The positive electrode coated region is coated with the positive electrode active substance layer, and the positive tab is coated with no positive electrode active substance layer. A lithium-ion battery cell is used as an example, for which, the positive electrode current collector may be made of aluminum, the positive electrode active substance layer includes a positive electrode active substance, and the positive electrode active substance may be lithium cobalt oxide, lithium iron phosphate, ternary lithium, lithium manganate oxide, or the like. The negative electrode plate includes a negative electrode current collector and a negative electrode active substance layer. The negative electrode active substance layer is applied on a surface of the negative electrode current collector. The negative electrode current collector includes a negative electrode coated region and a negative tab connected to the negative electrode coated region. The negative electrode coated region is coated with the negative electrode active substance layer, and the negative tab is coated with no negative electrode active substance layer. The negative electrode current collector may be made of copper, the negative electrode active substance layer includes a negative electrode active substance, and the negative electrode active substance may be carbon, silicon, or the like. The separator may be made of polypropylene (polypropylene, PP), polyethylene (polyethylene, PE), or the like.

The battery cell further includes a housing, an electrode terminal, and an adapting member, where an accommodating cavity for accommodating the electrode assembly is formed inside the housing, and the electrode terminal is mounted on the housing. The housing can protect the electrode assembly from the outside to prevent external foreign matters from affecting charging or discharging of the electrode assembly. The electrode terminal is configured to be electrically connected to a tab of the electrode assembly to lead out electric energy generated by the electrode assembly. The adapting member is configured to connect the electrode terminal and the tab to electrically connect the electrode terminal and the tab.

In the related art, when the adapting member connects the electrode terminal and the tab, an overload protection portion needs to be provided in the adapting member, where the overload protection portion is disposed between a region connected to the tab and a region connected to the electrode terminal. When the battery cell experiences excessive current flow, the overload protection portion disconnects electrical connection between the tab connecting region and the electrode terminal connecting region, thereby reducing the risk of thermal runaway caused by short circuit inside the battery, reducing safety hazards of the battery. To ensure proper functioning of the overload protection portion, that is, to avoid electrical connection formed after the tab directly crosses the overload protection portion to come into direct contact with the region connected to the electrode terminal caused by misalignment or excessive length of the tab, the overload protection portion is typically surrounded by an insulating material on the adapting member.

The inventors have found that an insulating member such as lower plastics for insulation is disposed between the housing and the adapting member of the battery cell. To be specific, there is no need to dispose a blocking member on a surface of an adapter facing the electrode terminal, and the tab is typically welded to a surface of the adapting member facing the electrode assembly, so the risk of the tab crossing the overload protection portion generally occurs on the surface of the adapter facing the electrode assembly.

In view of this, the embodiments of this application provide a technical solution. In this technical solution, an adapting member is applied to a battery cell, where the adapting member includes an adapter and a blocking member. The adapter includes a first connecting portion, a second connecting portion, and an overload protection portion. The first connecting portion is configured to be electrically connected to an electrode terminal of the battery cell, the second connecting portion is configured to be electrically connected to a tab of the battery cell, the overload protection portion is disposed between the first connecting portion and the second connecting portion, and the second connecting portion includes a tab connecting surface for connecting the tab. The blocking member is disposed on a side of the adapter having the tab connecting surface and covers at least a portion of the overload protection portion, and the blocking member extends from the overload protection portion toward two sides in a first direction such that the blocking member extends beyond edges of the overload protection portion on two sides in the first direction. The blocking member is configured to insulate and block direct electrical connection between the tab and the first connecting portion. The first direction is a direction along which the first connecting portion and the overload protection portion are disposed side by side. In the embodiments of this application, the blocking member is disposed on the side of the adapter facing the tab connecting surface, which reduces the risk of direct electrical connection formed after the tab crosses the overload protection portion to come into direct contact with the first connecting portion, and in turn reduces the probability of functional failure of the overload protection portion on the adapter, improving safety of the adapting member. In addition, the blocking member is located on a side of the adapter, so as to reduce internal space of the battery cell occupied by the blocking member, thereby increasing energy density of the battery cell.

The technical solution described in the embodiments of this application is applicable to batteries and electric apparatuses using a battery.

The electric apparatus may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, and an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric apparatus.

For ease of description, the electric apparatus being a vehicle is used as an example for description of the following embodiments.

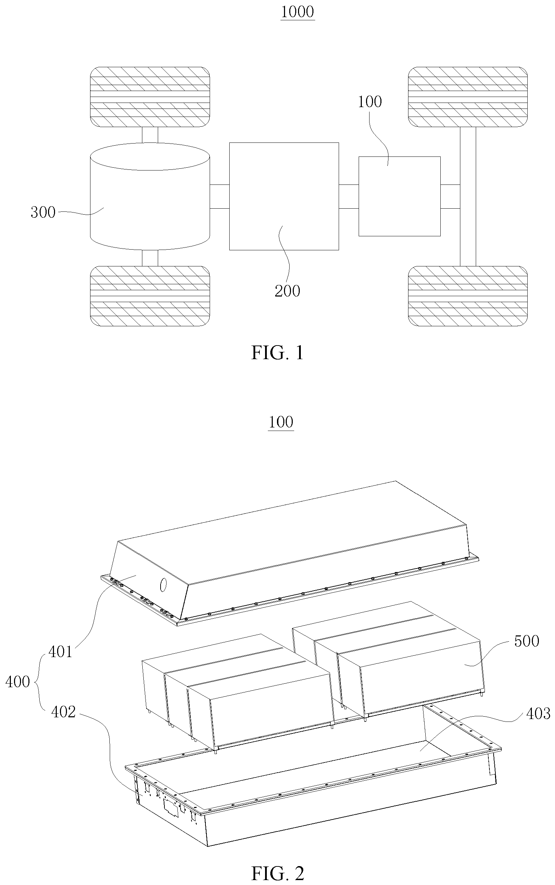

FIG. 1 is a schematic structural diagram of a vehicle according to some embodiments of this application.

As shown in FIG. 1, the vehicle 1000 is provided with a battery 100 inside, where the battery 100 may be disposed at the bottom, front, or rear of the vehicle 1000. The battery 100 may be configured to supply power to the vehicle 1000. For example, the battery 100 may be used as an operational power source for the vehicle 1000.

The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

FIG. 2 is a schematic exploded view of a battery according to some embodiments of this application.

As shown in FIG. 2, the battery 100 includes a box 400 and a battery cell 1 (not shown), where the battery cell 1 is accommodated in the box 400.

The box 400 is configured to accommodate the battery cell 1, and the box 400 may be a variety of structures. In some embodiments, the box 400 may include a first box portion 401 and a second box portion 402. The first box portion 401 and the second box portion 402 fit together to jointly define an accommodating space for accommodating the battery cells 1. The second box portion 402 may be a hollow structure with an opening at one end, the first box portion 401 is a plate-shaped structure, and the first box portion 401 covers the opening side of the second box portion 402 so as to form the box having the accommodating space. Alternatively, both the first box portion 401 and the second box portion 402 may be hollow structures with an opening at one side, and the opening side of the first box portion 401 is engaged with the opening side of the second box portion 402 so as to form the box having the accommodating space. Certainly, the first box portion 401 and the second box portion 402 may be of various shapes, such as cylinder or cuboid.

In order to improve airtightness after connection of the first box portion 401 and the second box portion 402, a sealing member, such as sealing gum and sealing ring, may further be disposed between the first box portion 401 and the second box portion 402.

Assuming that the first box portion 401 fits on the top of the second box portion 402, the first box portion 401 may also be referred to as an upper box part and the second box portion 402 may also be referred to as a lower box part.

In the battery 100, one or more battery cells 1 may be provided. If a plurality of battery cells 1 are provided, the plurality of battery cells 1 may be connected in series, parallel, or series-parallel, where being connected in series-parallel means that the plurality of battery cells 1 are connected in both series and parallel. The plurality of battery cells 1 may be directly connected in series, parallel, or series-parallel, and then an entirety of the plurality of battery cells 1 is accommodated in the box 400; or certainly, the plurality of battery cells 1 may be connected in series, parallel, or series-parallel first to form a battery module 500, and then a plurality of battery modules 500 are connected in series, parallel, or series-parallel to form an entirety which is accommodated in the box 400.

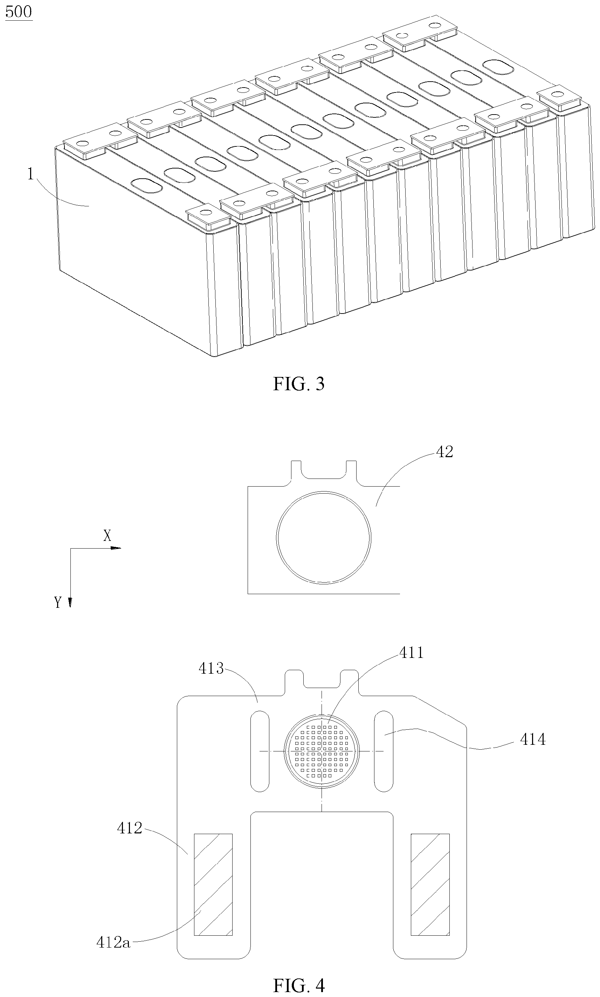

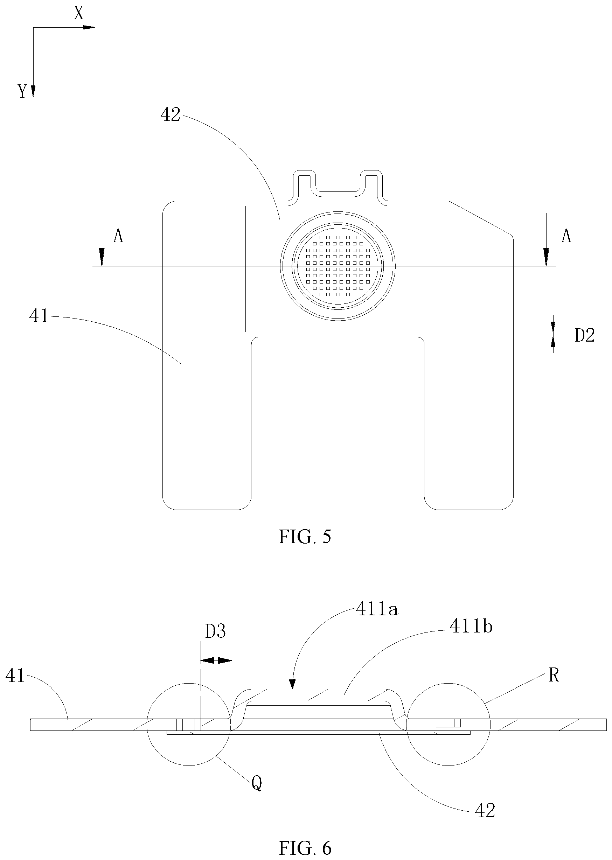

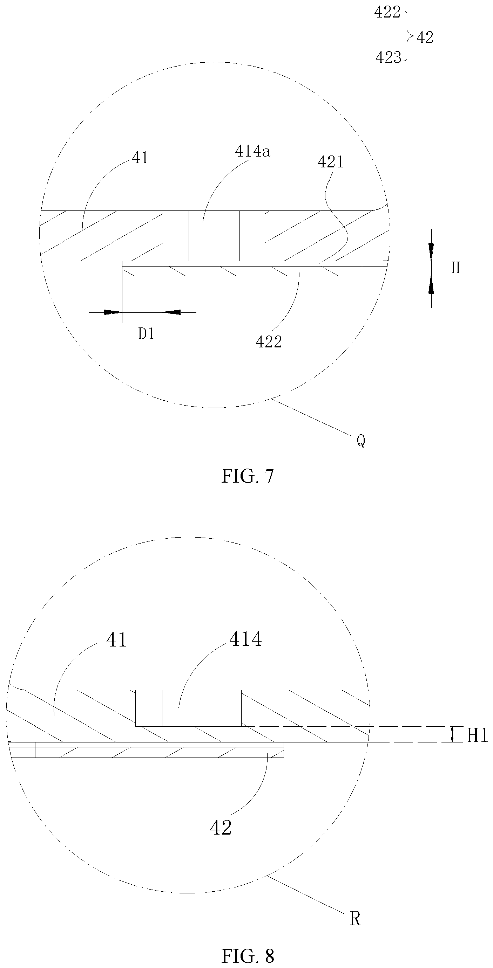

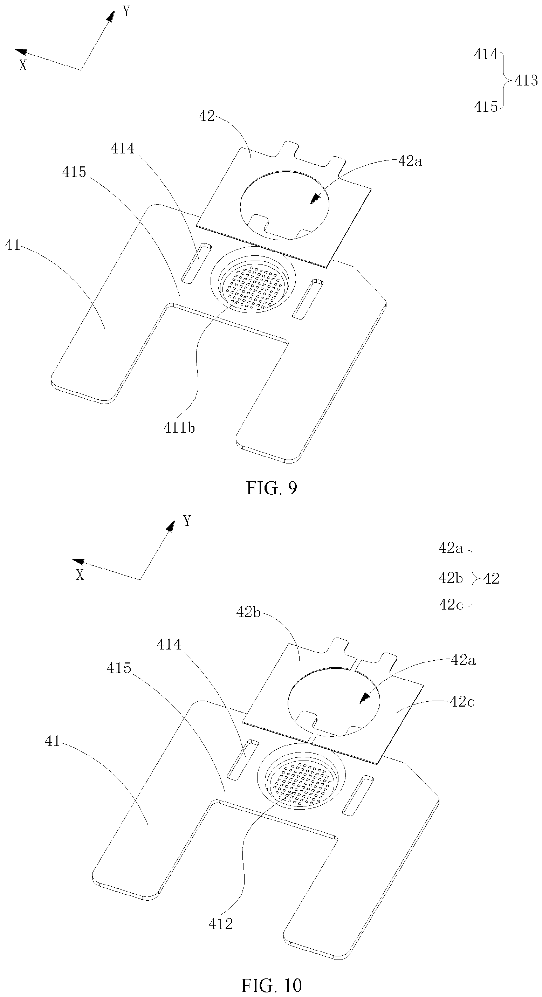

FIG. 3 is a schematic structural diagram of the battery module shown in FIG. 2. FIG. 4 is a schematic exploded view of an adapting member according to some embodiments of this application. FIG. 5 is a schematic structural diagram of the adapting member shown in FIG. 4. FIG. 6 is a schematic structural diagram of a cross section along A-A in FIG. 5. FIG. 7 is an enlarged view of a structure of region Q shown in FIG. 6. FIG. 8 is an enlarged view of a structure of region R shown in FIG. 6. FIG. 9 is a schematic exploded view of another adapting member according to some embodiments of this application.

As shown in FIG. 3 to FIG. 9, an adapting member 40 in the embodiments of this application is applied to the battery cell 1, where the adapting member 40 includes an adapter 41 and a blocking member 42. The adapter 41 includes a first connecting portion 411, a second connecting portion 412, and an overload protection portion 413. The first connecting portion 411 is configured to be electrically connected to an electrode terminal 20 of the battery cell 1, the second connecting portion 412 is configured to be electrically connected to a tab 32 of the battery cell 1, the overload protection portion 413 is disposed between the first connecting portion 411 and the second connecting portion 412, and the second connecting portion 412 includes a tab 32 connecting surface for connecting the tab 32. The blocking member 42 is disposed on a side of the adapter 41 having the tab 32 connecting surface and covers at least a portion of the overload protection portion 413, and the blocking member 42 extends from the overload protection portion 413 toward two sides in a first direction X such that the blocking member 42 extends beyond edges of the overload protection portion 413 on two sides in the first direction X. The blocking member 42 is configured to insulate and block direct electrical connection between the tab 32 and the first connecting portion 411. The first direction X is a direction along which the first connecting portion 411 and the overload protection portion 413 are disposed side by side.

The tab 32 is a portion protruding out of a body portion 31 in the electrode assembly 30. For example, the electrode assembly 30 includes a positive tab and a negative tab, where the positive tab may be a portion of a positive electrode plate that is coated with no active substance layer, the negative tab may be a portion of a negative electrode plate that is coated with no active substance layer, and the positive tab and the negative tab lead out electric energy generated by the body portion 31. The positive tab and the negative tab may both be located at one end of the body portion 31 or be located at two opposite ends of the body portion 31 respectively. The adapting member 40 can be configured to connect the positive tab and the electrode terminal 20, and can also be configured to connect the negative tab and the electrode terminal 20.

At least a portion of the electrode terminal 20 is exposed to the outside of the battery cell 1 for ease of connection to other members (for example, a busbar), so as to lead out electric energy generated by the electrode assembly 30.

The electrode terminal 20 may be a portion of the housing 10 or an independent member mounted on the housing 10.

In some examples of these embodiments, the blocking member 42 in the adapting member 40 is adhered to the side of the adapter 41 facing the tab connecting surface 412a, and the blocking member 42 covers the overload protection portion 413. In some other examples of these embodiments, the blocking member 42 is connected to the adapter 41 by snap-fitting or in another non-welding manner.

The adapter 41 includes a conductive material, so that current can flow through the adapter 41. The adapter 41 may be made of metal such as aluminum or copper. The overload protection portion 413 in the adapter 41 includes a conductive material. In some embodiments, the current can flow through the adapter 41 via the overload protection portion 413. When the current flows through the adapter 41, the overload protection portion 413 can generate heat and warm up. When the current exceeds a given threshold, the overload protection portion 413 breaks, so as to disconnect electrical connection between the first connecting portion 411 and the second connecting portion 412.

The blocking member 42 has electrical insulation, so the blocking member 42 can effectively insulate the current, making it impossible for the tab 32 to be in direct contact with the overload protection portion 413 and the first connecting portion 411. In some embodiments, the blocking member 42 has hightemperature resistance, so the blocking member 42 can effectively withstand heat generated by the overload protection portion 413, alleviating melting and deformation of the blocking member 42 during use. In some examples, the blocking member 42 is made of polyethylene glycol terephthalate (polyethylene glycol terephthalate, PET), PE, or PP.

The blocking member 42 is disposed on the side of the adapter 41 facing the tab 32 connecting surface, and no blocking member 42 is disposed on a side of the adapter 41 provided with no tab connecting surface 412a, so as to reduce space occupied by the blocking member 42, and in turn reduce space occupied by the adapting member 40 in the battery cell 1, increasing energy density of the battery cell 1.

In the first direction X, the overload protection portion 413 has edges on two opposite sides, and the blocking member 42 also has edges on two opposite sides. In a stacking direction of the adapter 41 and the blocking member 42, a projection of the blocking member 42 covers at least a portion of the overload protection portion 413, and the edges of the overload protection portion 413 on two sides in the first direction X are located between the edges of the blocking member 42 on two sides. The first direction X is the direction along which the first connecting portion 411 and the overload protection portion 413 are disposed side by side. To be specific, in the adapter 41, the first connecting portion 411 and the overload protection portion 413 are located in a same plane, and the first direction X is the direction along which the first connecting portion 411 and the overload protection portion 413 are disposed side by side in this plane. Therefore, there is enough space between an edge of the overload protection portion 413 on a side close to the overload protection portion 413 in the first direction X and the first connecting portion 411, so that the blocking member 42 covers the adapter 41. It should be noted that the first connecting portion 411 and the overload protection portion 413 being disposed side by side in the adapter 41 does not mean that the first connecting portion 411 and the overload protection portion 413 are stacked.

In the embodiments of this application, the blocking member 42 is disposed on the side of the adapter 41 facing the tab 32 connecting surface, which greatly reduces the probability of direct electrical connection formed after the tab 32 crosses the overload protection portion 413 to come into direct contact with the first connecting portion 411, and in turn avoids functional failure of the overload protection portion 413 on the adapter 41, improving reliability of the adapting member 40. In addition, the blocking member 42 is located on a side of the adapter 41, so as to reduce the internal space of the battery cell 1 occupied by the blocking member 42, thereby increasing the energy density of the battery cell 1.

In some embodiments, as shown in FIG. 6 and FIG. 7, a distance by which the blocking member 42 extends beyond the edges of the overload protection portion 413 on two sides in the first direction X is 0.5 mm to 5 mm, where the first direction X is the direction along which the first connecting portion 411 and the overload protection portion 413 are disposed side by side.

In the first direction X, a distance by which the blocking member 42 extends from the overload protection portion 413 toward two sides is 0.5 mm to 5 mm. For example, the distance by which the edge of the blocking member 42 extends is D1, where the value of D1 is 0.5 mm, 0.6 mm, 1 mm, 1.5 mm, 2 mm, 2.5 mm, 3 mm, 4 mm, or 5 mm.

A greater distance by which the edge of the blocking member 42 extends beyond the overload protection portion 413 means larger space and weight occupied by the blocking member 42, resulting in higher material costs. A smaller distance by which the edge of the blocking member 42 extends beyond the overload protection portion 413 means lower reliability of the blocking member 42 completely covering the overload protection portion 413 due to the risk of misalignment during actual assembly. If the distance by which the edge of the blocking member 42 extends beyond the overload protection portion 413 is excessively small, the blocking member 42 does not completely cover the overload protection portion 413, and the tab 32 crosses the overload protection portion 413 toward the first connecting portion 411 due to misalignment, resulting in failure of the overload protection portion 413. In these embodiments, the distance by which the edge of the blocking member 42 extends beyond the overload protection portion 413 is limited to 0.5 mm to 5 mm, so as to ensure that the blocking member 42 covers the overload protection portion 413, controlling overall manufacturing costs and space occupation of the adapting member 40 while avoiding the failure of the overload protection portion 413.

In some embodiments, the blocking member 42 is adhered to the adapter 41, and the distance by which the edge of the blocking member 42 extends beyond the overload protection portion 413 is limited to 0.5 mm to 5 mm, so that there is an enough connecting area between the blocking member 42 and the adapter 41, thereby reducing the risk of falling-off of the blocking member 42.

In some embodiments, still referring to FIG. 5, in a thickness direction of the blocking member 42, a projection of the blocking member 42 is located within a projection of the adapter 41, and in a direction perpendicular to the first direction X, a distance D2 between edges of a projection of the blocking member 42 on two sides and edges of a projection of the adapter 41 on two sides is 0 mm to 0.2 mm.

For example, the value of the distance D2 between the edges of the projection of the blocking member 42 on two sides and the edges of the projection of the adapter 41 on two sides is 0 mm, 0.01 mm, 0.05 mm, 0.1 mm, 0.15 mm, or 0.2 mm.

In the thickness direction of the blocking member 42, the overall structure of the blocking member 42 covers the adapter 41 within a preset region, and any portion of the blocking member 42 does not extend beyond edges of the adapter 41, which can prevent the blocking member 42 from occupying space of other components, reducing influence on other components in the battery cell 1.

In some embodiments of this application, in the direction perpendicular to the first direction X, the distance D2 between the edges of the projection of the blocking member 42 on two sides and the edges of the projection of the adapter 41 on two sides is 0 mm to 0.2 mm. Such a size range can prevent the blocking member 42 from extending out of the adapter 41, reduce the assembly space occupied by the blocking member 42, and reduce the risk of adhesive overflow of the blocking member 42 when the blocking member 42 is adhered to the adapter 41. In addition, a size of edge regions of the overload protection portion 413 and the first connecting portion 411 that are not covered by the blocking member 42 is controlled to be 0 mm to 0.2 mm, which can ensure that the tab 32 is supported by the blocking member 42 with a certain thickness even if the tab 32 crosses the overload protection portion 413, such that in the thickness direction of the blocking member 42, there is a gap between the tab 32 and the overload protection portion 413 as well as between the tab 32 and the first connecting portion 411, further reducing the risk of the tab 32 crossing the overload protection portion 413 to be directly electrically connected to the first connecting portion 411.

In some embodiments, still referring to FIG. 6, the adapter 41 has an electrode terminal connecting surface 411a in its thickness direction, the electrode terminal connecting surface 411a and the tab connecting surface 412a being located on a same side of the adapter 41 or on two sides facing away from each other of the adapter 41 respectively; and the blocking member 42 is disposed on the side of the adapter 41 having the tab 32 connecting surface and covers the overload protection portion 413 and at least a portion of the first connecting portion 411.

In some embodiments, the electrode terminal connecting surface 411a and the tab connecting surface 412a are located on a same side of the adapter 41, and the blocking member 42 covers the overload protection portion 413 and also a portion of the electrode terminal connecting surface 411a. In some other examples, the electrode terminal connecting surface 411a and the tab connecting surface 412a are located on two sides facing away from each other of the adapter 41 respectively, and the blocking member 42 covers the overload protection portion 413 and a portion of the first connecting portion 411.

In some embodiments of this application, the blocking member 42 covers at least a portion of the first connecting portion 411, which can improve the reliability of the blocking member 42, further reducing the probability of direct contact between the tab 32 and the first connecting portion 411 caused by misalignment or excessive length of the tab 32.

In some embodiments, the first connecting portion 411 includes an electrode terminal connecting portion 411b, where in the thickness direction, the electrode terminal connecting portion 411b protrudes in a direction approaching the electrode terminal 20, the electrode terminal connecting surface 411a is a surface of the electrode terminal connecting portion 411b facing the electrode terminal 20, and the overload protection portion 413 and the electrode terminal connecting portion 411b are spaced apart.

In some cases, length of the electrode terminal 20 used is similar to thickness of an end cover 12, and the electrode terminal connecting portion 411b needs to protrude in the direction approaching the electrode terminal 20, such that a side of the electrode terminal connecting portion 411b facing the electrode terminal 20 abuts against the electrode terminal 20. A side of the electrode terminal connecting portion 411b facing away from the electrode terminal 20 and the electrode terminal 20 are provided with a plurality of grooves for preventing mirror reflection of welding laser during welding, so as to prevent laser reflected during welding from burning other components.

In some embodiments of this application, the electrode terminal connecting portion 411b allows for better connection between the electrode terminal connecting surface 411a and the electrode terminal 20, further reducing the rate of poor welding and improving the reliability of connection between the adapter 41 and the electrode terminal 20. In addition, when the electrode terminal 20 is laser-welded to the adapter 41, the laser reflected can be blocked by the grooves formed, which reduces the probability of the laser reflected causing damage to other components in the battery cell 1, improving safety of the battery cell 1.

In some embodiments, still referring to FIG. 6, a minimum distance between the overload protection portion 413 and the electrode terminal connecting portion 411b is 1 mm to 50 mm. For example, the minimum distance between the overload protection portion 413 and the electrode terminal connecting portion 411b is 1 mm, 2 mm, 5 mm, 10 mm, 15 mm, 20 mm, 30 mm, 40 mm, or 50 mm.

If the distance between the overload protection portion 413 and the electrode terminal connecting portion 411b is excessively small, the blocking member 42 covers an opening formed after the electrode terminal connecting portion 411b protrudes when covering the overload protection portion 413. The electrode terminal connecting portion 411b and the electrode terminal 20 are welded through the opening of the electrode terminal connecting portion 411b, but interference between the blocking member 42 and the opening affects the yield rate of welding. In addition, the laser scattered during welding also irradiates the blocking member 42, which causes damage to the blocking member 42, reducing the reliability of the blocking member 42. A greater distance between the overload protection portion 413 and the electrode terminal connecting portion 411b means a longer length of the blocking member 42 in the first direction X, which in turn means higher material costs required for the blocking member 42. In these embodiments, the distance between the overload protection portion 413 and the electrode terminal connecting portion 411b is defined as D3, and the value of D3 is 1 mm to 50 mm, so as to avoid interference between the overload protection portion 413 and the opening of the electrode terminal connecting portion 411b. In addition, the material costs of the blocking member 42 are reduced.

In some embodiments, as shown in FIG. 7 and FIG. 9, the overload protection portion 413 includes a through hole 414a and a fusing portion 415, where the fusing portion 415 and the through hole 414a are successively distributed along a second direction Y. The first direction X intersects with the second direction Y. In some examples, the fusing portion 415 is a region from an edge of the through hole 414a to an edge of the adapter 41 in the second direction Y. No current passes through the through hole 414a, and the current passes through only the fusing portion 415. In other words, a cross-sectional area of the fusing portion 415 in the thickness direction is smaller than those of other portions (for example, the first connecting portion 411), and a maximum threshold that the fusing portion 415 can withstand is positively correlated with a distance between the edge of the through hole 414a and the edge of the adapter 41.

In these embodiments, in the overload protection portion 413 formed by the through hole 414a and the fusing portion 415, the through hole 414a has a simple manufacturing process, thereby reducing process difficulty of the overload protection portion 413.

In some embodiments, as shown in FIG. 8 and FIG. 9, the overload protection portion 413 has a thinned portion 414, where the thinned portion 414 extends along a second direction Y, and the first direction X intersects with the second direction Y.

In some embodiments, the thinned portion 414 has a residual thickness, and the fusing portion 415 includes the thinned portion 414 and a region from the thinned portion 414 to the edge of the adapter 41 in the second direction Y. The maximum threshold that the fusing portion 415 can withstand is not only affected by the distance from the thinned portion 414 to the edge of the adapter 41, but also positively correlated with the thickness of the thinned portion 414.

In these embodiments, the fusing portion 415 and thinned portion 414 in the overload protection portion 413 jointly provide overload protection. When a sum of cross-sectional areas of the fusing portion 415 and the thinned portion 414 is smaller than that of the first connecting portion 411 and also smaller than that of the second connecting portion 412, and the current that the fusing portion 415 and the thinned portion 414 can withstand exceeds the threshold, the fusing portion 415 and the thinned portion 414 break, and the current cannot be transferred from the second connecting portion 412 to the first connecting portion 411. In the foregoing solution, the threshold of the overload protection portion 413 can be adjusted more flexibly by adjusting the shape and thickness of the thinned portion 414.

In some other embodiments, the thinned portion 414 extends to an edge of the overload protection portion 413 along the second direction Y, and the fusing portion 415 is the thinned portion 414.

In the foregoing solution, the threshold of the overload protection portion 413 can be adjusted more flexibly by adjusting the thickness of the thinned portion 414.

In some embodiments, thickness H1 of the thinned portion 414 satisfies 0 mm < H1 ≤ 0.5 mm.

In some embodiments, to improve current flow capacity of the adapter 41, the thinned portion 414 has a certain thickness, thereby improving current flow capacity at the thinned region.

A greater thickness of the thinned portion 414 means higher working current that can pass through the thinned portion 414 and more heat that the thinned portion 414 can withstand. However, because the thinned portion 414 is a portion of the overload protection portion 413, the heat that the thinned portion 414 can withstand needs to be reduced, so that the thinned portion 414 can burn out when the current exceeding a given threshold flows through the thinned portion 414. In these embodiments, the thickness H1 of the thinned portion 414 is limited to satisfying 0 mm < H1 ≤ 0.5 mm, which can ensure overall strength of the adapter 41 without functional failure of the overload protection portion 413.

In some embodiments, as shown in FIG. 9, the blocking member 42 includes an avoidance hole 42a, where the avoidance hole 42a is configured to avoid the electrode terminal connecting portion 411b and is disposed corresponding to the electrode terminal connecting portion 411b.

The electrode terminal connecting portion 411b is generally welded to the electrode terminal 20, and the avoidance hole 42a is disposed corresponding to the electrode terminal connecting portion 411b, so as to reduce the risk of the blocking member 42 being melted by laser or interfering with welding.

The avoidance hole 42a on the blocking member 42 reduces interference in the connection between the electrode terminal connecting portion 411b and the electrode terminal 20, and protects the overload protection portion 413 on the adapter 41 to the greatest extent, reducing the risk of direct contact between the tab 32 and the electrode terminal connecting portion 411b.

In some embodiments, as shown in FIG. 9, the overload protection portion 413 is provided in two, where the two overload protection portions 413 are located on two sides of the first connecting portion 411 in the first direction X and are connected to the two second connecting portions 412 respectively.

In some examples of these embodiments, the battery cell 1 may include a plurality of electrode assemblies 30, and the overload protection portion 413 is disposed on both sides of the first connecting portion 411. When any one of the electrode assemblies 30 experiences a short circuit, the plurality of overload protection portions 413 can disconnect electrical connection of that electrode assembly 30 in a timely manner, improving the safety performance of the battery cell 1.

In some embodiments, the blocking member 42 is an integral structure, and an orthographic projection of the blocking member 42 on the adapter 41 covers at least the two overload protection portions 413. The integral structure can simplify the assembly of the blocking member 42, improving the assembly efficiency.

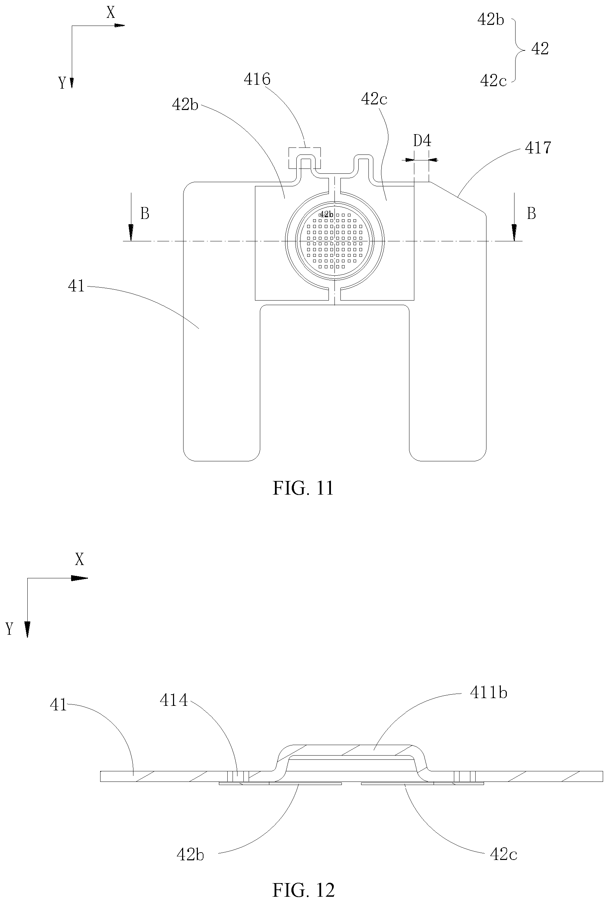

FIG. 10 is a schematic exploded view of still another adapting member according to some embodiments of this application. FIG. 11 is a schematic structural diagram of the adapting member shown in FIG. 10. FIG. 12 is a schematic structural diagram of a cross section along B-B in FIG. 11.

In some embodiments, referring to FIG. 10 to FIG. 12, the blocking member 42 is a segmented structure, and the blocking member 42 includes a first sub-portion 42b and a second sub-portion 42c, the first sub-portion 42b and the second sub-portion 42c covering the two overload protection portions 413 respectively.

In these embodiments, the assembly requirements for assembling the blocking member 42 onto the adapter 41 can be reduced. The blocking member 42 is divided into the first sub-portion 42b and the second sub-portion 42c, with the first sub-portion 42b covering one overload protection portion 413 and the second sub-portion 42c covering one overload protection portion 413. Similarly, in some other examples of these embodiments, there may further be a third sub-portion, a fourth sub-portion, and the like, where the third sub-portion covers one overload protection portion 413, the fourth sub-portion covers one overload protection portion 413, and the sub-portions do not affect each other. This expands the application range of the blocking member 42 and reduces the need for specialized manufacturing, making the blocking member 42 become a general-purpose structure.

In some embodiments, as shown in FIG. 11, the adapter 41 further includes a limiting portion 416, the limiting portion 416 extending along a second direction Y.

In these embodiments, the limiting portion 416 disposed on the adapting member 40 allows the blocking member 42 to be more accurately mounted in the preset region when the blocking member 42 is assembled onto the adapter 41, and reduces the defective rate of the assembly of the blocking member 42 and the adapter 41 in automated production and manual production.

In some embodiments, the blocking member 42 covers at least a portion of a surface of the limiting portion 416 facing the tab connecting surface 412a, and the blocking member 42 does not extend beyond an outer edge of the limiting portion 416.

In some examples of these embodiments, the outer edge of the limiting portion 416 on the adapter 41 extends beyond an outer edge of the blocking member 42 by 0 mm to 0.2 mm, which reduces the manufacturing process of the adapter 41 and the blocking member 42, reducing the probability of the edge of the blocking member 42 extending beyond the edge of the adapter 41 to interfere with other components. In addition, the blocking member 42 can be assembled with the adapter 41 through adhesion, and the space reserved can prevent the problem of adhesive overflow of the blocking member 42 during mounting.

In some embodiments, as shown in FIG. 11, a fool-proofing structure 417 is disposed on a side of the adapter 41 in the first direction X.

In these embodiments, the fool-proofing structure 417 is configured to avoid the problem of incorrect mounting direction of the adapter 41 when the adapter 41 is mounted between the electrode assembly 30 and the electrode terminal 20.

In some embodiments, as shown in FIG. 11, an edge of the blocking member 42 adjacent to the fool-proofing structure 417 in the first direction X is distributed at a preset distance from the fool-proofing structure 417, where the preset distance is 0 mm to 0.2 mm.

In these embodiments, the fool-proofing structure 417 is disposed in a region of the adapter 41 that is not connected to the tab 32 and the electrode terminal 20, reducing influence of the fool-proofing structure 417 on the adapting function of the adapter 41. The preset distance between the edge of the blocking member 42 adjacent to the fool-proofing structure 417 in the first direction X and the fool-proofing structure 417 is used to prevent the edge of the blocking member 42 from extending beyond the adapter 41 along the stacking direction of the blocking member 42 and the adapter 41, avoiding interference between the blocking member 42 and other components. In these embodiments, the preset distance is D4, and the value of D4 is 0 mm to 0.2 mm.

In some embodiments, still referring to FIG. 7, the blocking member 42 includes an adhesive layer 421 and a blocking layer 422 that are stacked in a thickness direction of the blocking member 42, the blocking layer 422 being adhered to the adapter 41 through the adhesive layer 421.

In some examples of these embodiments, the adhesive layer 421 is made of a material with good insulation, thereby further improving the blocking characteristic of the blocking member 42. In addition, the adhesive layer 421 allows for sufficient connection strength between the blocking member 42 and the adapter 41, avoiding separation between the blocking member 42 and the adapter 41.

In some embodiments, thickness of the blocking member 42 is 1 µm to 500 µm. For example, the thickness of the blocking member 42 is 1 µm, 2 µm, 5 µm, 10 µm, 50 µm, 100 µm, 200 µm, 300 µm, 400 µm, or 500 µm.

A greater thickness of the blocking member 42 means higher material costs and larger internal space of the battery cell occupied by the blocking member 42. A smaller thickness of the blocking member 42 means higher process difficulty and higher manufacturing costs. In these embodiments, the thickness of the blocking member 42 is defined as H, and the value of H is 1 µm to 500 µm, so as to balance the process requirements and the cost requirements and further reduce the internal space of the battery cell 1 occupied by the blocking member 42, further increasing the energy density of the battery cell 1.

In some embodiments, a thickness ratio of the blocking member 42 to the adapter 41 is 1/10 to 4/5. For example, the thickness ratio of the blocking member 42 to the adapter 41 is 1/10, 1/5, 3/10, 2/5, 1/2, 3/5, 7/10, or 4/5.

The space occupied by the adapting member 40 mounted in the battery cell 1 is relatively fixed. Therefore, if the blocking member 42 is thicker, the adapter 41 is thinner, which reduces the overall strength of the adapter 41. If the blocking member 42 is thinner, the adapter 41 is thicker, which reduces the overall strength of the blocking member 42. In this technical solution, the thickness ratio of the blocking member 42 to the adapter 41 is limited to 1/10 to 4/5, so as to prevent the adapting member 40 from occupying the space of the folded tab structure while balancing the respective strengths of the blocking member 42 and the adapter 41.

In some embodiments, in a thickness direction of the blocking member 42, a projection area ratio of the blocking member 42 to the adapter 41 is 1/5 to 4/5. For example, the projection area ratio of the blocking member 42 to the adapter 41 is 1/5, 2/5, 3/5, or 4/5.

A larger coverage area of the blocking member 42 on the adapter 41 means higher material costs required for the blocking member 42. A smaller coverage area of the blocking member 42 on the adapter 41 means poorer blocking effect of the blocking member 42. In addition, when the blocking member 42 is adhered to the adapter 41, a smaller area of the blocking member 42 means lower adhesion strength of the blocking member 42. In these embodiments, the area ratio of the blocking member 42 to the adapter 41 is limited to 1/5 to 4/5, so as to balance the material costs and the blocking effect of the blocking member 42.

In some embodiments, this application further provides a battery cell 1 including: a housing 10 provided with an accommodating cavity; an electrode terminal 20 disposed on the housing 10; an electrode assembly 30 accommodated in the accommodating cavity, the electrode assembly 30 including a body portion 31 and a tab 32 led out of the body portion 31; and an adapting member 40, where the adapting member 40 is the adapting member 40 according to any one of the foregoing embodiments, the first connecting portion 411 of the adapter 41 is electrically connected to the electrode terminal 20, and the second connecting portion 412 is electrically connected to the tab 32.

The housing 10 is a component for accommodating the electrode assembly 30. The housing 10 may be made of various materials, such as copper, iron, aluminum, steel, or aluminum alloy. The housing 10 may be of various shapes, such as cylinder or cuboid. For example, in the figure, the housing 10 is a cuboid.

The housing 10 includes a housing body 11 and an end cover 12, where the housing body 11 has an opening, and the end cover 12 covers the opening.

The housing body 11 may be a structure with an opening at one side, and the end cover 12 is designed to cover the opening of the housing body 11. Alternatively, the housing body 11 may be a structure with openings at two sides, and the end cover 12 is provided in two, where the two end covers 12 cover the two openings of the housing body 11 respectively.

For example, the end cover 12 is connected to the housing body 11 through welding, adhesion, snap-fitting, or in another manner.

The electrode assembly 30 is a component in which electrochemical reactions take place in the battery cell 1. The electrode assembly 30 may be a wound structure formed by a positive electrode plate, a separator, and a negative electrode plate through winding. The electrode assembly 30 may alternatively be a laminated structure formed by a positive electrode plate, a separator, and a negative electrode plate through lamination.

The body portion 31 may include a portion of the positive electrode plate coated with an active substance layer, a portion of the negative electrode plate coated with an active substance layer, and the separator. Active substances in the active substance layers are used for electrochemical reactions with the electrolyte and the like to produce charging and discharging processes.

In some embodiments, the tab 32 connecting surface is located on a surface of the second connecting portion 412 facing the electrode assembly 30.

In these embodiments, the blocking member 42 and the tab 32 are both located on a side facing away from the electrode terminal 20, which is conducive to further reducing the internal space of the battery cell 1 occupied by the blocking member 42, increasing the energy density of the battery cell 1.

In some embodiments, this application further provides a battery including a plurality of battery cells 1 according to any one of the foregoing embodiments.

In some embodiments, this application further provides an electric apparatus including a plurality of battery cells 1 according to any one of the foregoing embodiments, where the battery cell 1 is configured to supply electric energy.

In some embodiments, referring to FIG. 4 to FIG. 9, this application provides an adapting member 40 applied to a battery cell, where the adapting member 40 includes an adapter 41 and a blocking member 42. The adapter 41 includes a first connecting portion 411, a second connecting portion 412, an overload protection portion 413, a limiting portion 416, and a fool-proofing structure 417. The first connecting portion 411 is configured to be electrically connected to an electrode terminal 20 of the battery cell 1, the second connecting portion 412 is configured to be electrically connected to a tab 32 of the battery cell 1, the overload protection portion 413 is disposed between the first connecting portion 411 and the second connecting portion 412, and the second connecting portion 412 includes a tab connecting surface 412a for connecting the tab 32. The blocking member 42 is disposed on a side of the adapter 41 having the tab connecting surface 412a and covers at least a portion of the overload protection portion 413. The tab connecting surface 412a is located on a surface of the second connecting portion 412 facing the electrode assembly 30.

The blocking member 42 extends from the overload protection portion 413 toward two sides in a first direction X, such that a distance by which the blocking member 42 extends beyond edges of the overload protection portion 413 on two sides in the first direction X is 0.5 mm to 5 mm. In a direction perpendicular to the first direction X, a distance D2 between an outer contour of a projection of the blocking member 42 and an outer contour of a projection of the adapter 41 is 0 mm to 0.2 mm. The first connecting portion 411 includes an electrode terminal connecting portion 411b, and the electrode terminal connecting portion 411b protrudes in a direction approaching the electrode terminal 20. The overload protection portion 413 includes a through hole 414a and a fusing portion 415. The blocking member 42 includes an avoidance hole 42a, and the avoidance hole 42a is disposed corresponding to the electrode terminal connecting portion 411b. The limiting portion 416 extends along a second direction Y.

It should be noted that in absence of conflicts, the embodiments and features in the embodiments in this application may be combined with each other.

In conclusion, it should be noted that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions in the embodiments of this application.

## Claims

1. An adapting member, applicable to a battery cell , **characterized by** comprising:
an adapter comprising a first connecting portion, a second connecting portion, and an overload protection portion, wherein the first connecting portion is configured to be electrically connected to an electrode terminal of the battery cell, the second connecting portion is configured to be electrically connected to a tab of the battery cell, the overload protection portion is disposed between the first connecting portion and the second connecting portion, and the second connecting portion comprises a tab connecting surface for connecting the tab; and
a blocking member, wherein the blocking member is disposed on a side of the adapter having the tab connecting surface and covers at least a portion of the overload protection portion, the blocking member extends from the overload protection portion toward two sides in a first direction such that the blocking member extends beyond edges of the overload protection portion on the two sides in the first direction, and the blocking member is configured to insulate and block direct electrical connection between the tab and the first connecting portion, the first direction being a direction along which the first connecting portion and the overload protection portion are disposed side by side.

2. The adapting member according to claim 1, wherein a distance by which the blocking member extends beyond the edges of the overload protection portion on the two sides in the first direction is D1, D1 satisfying 0.5 mm to 5 mm.

3. The adapting member according to claim 1, wherein in a thickness direction of the blocking member, a projection of the blocking member is located within a projection of the adapter, and in a direction perpendicular to the first direction, a distance, D2, between edges of a projection of the blocking member on two sides and edges of a projection of the adapter on two sides is 0 mm to 0.2 mm.

4. The adapting member according to claim 1, wherein the adapter has an electrode terminal connecting surface in its thickness direction, the electrode terminal connecting surface and the tab connecting surface being located on a same side of the adapter or on two sides facing away from each other of the adapter respectively; and the blocking member is disposed on the side of the adapter having the tab connecting surface and covers the overload protection portion and at least a portion of the first connecting portion.

5. The adapting member according to claim 4, wherein the first connecting portion comprises an electrode terminal connecting portion, wherein in the thickness direction, the electrode terminal connecting portion protrudes in a direction toward the electrode terminal, the electrode terminal connecting surface is a surface of the electrode terminal connecting portion facing the electrode terminal, and the overload protection portion and the electrode terminal connecting portion are spaced apart.

6. The adapting member according to claim 5, wherein a minimum distance between the overload protection portion and the electrode terminal connecting portion is 1 mm to 50 mm.

7. The adapting member according to claim 6, wherein the overload protection portion comprises a through hole and a fusing portion, wherein the fusing portion and the through hole are successively distributed along a second direction, and the first direction intersects with the second direction.

8. The adapting member according to claim 6, wherein the overload protection portion has a thinned portion, wherein the thinned portion extends along a second direction, and the first direction intersects with the second direction.

9. The adapting member according to claim 8, wherein thickness, H1, of the thinned portion satisfies 0 mm < H1 ≤ 0.5 mm.

10. The adapting member according to claim 5, wherein the blocking member has an avoidance hole, wherein the avoidance hole is configured to avoid the electrode terminal connecting portion and is disposed corresponding to the electrode terminal connecting portion.

11. The adapting member according to claim 1, wherein two overload protection portion are provided, wherein the two overload protection portions are located on two sides of the first connecting portion in the first direction and are connected to the two second connecting portions respectively.

12. The adapting member according to claim 11, wherein the blocking member is an integral structure, and an orthographic projection of the blocking member on the adapter covers at least the two overload protection portions.

13. The adapting member according to claim 11, wherein the blocking member is a segmented structure, and the blocking member comprises a first sub-portion and a second sub-portion, the first sub-portion and the second sub-portion covering the two overload protection portions respectively.

14. The adapting member according to claim 1, wherein the adapter further comprises a limiting portion, the limiting portion extending along a second direction.

15. The adapting member according to claim 14, wherein the blocking member covers at least a portion of a surface of the limiting portion facing the tab connecting surface, and the blocking member does not extend beyond an outer edge of the limiting portion.

16. The adapting member according to claim 1, wherein the blocking member comprises an adhesive layer and a blocking layer that are stacked in a thickness direction of the blocking member, the blocking layer being adhered to the adapter through the adhesive layer.

17. The adapting member according to claim 1, wherein thickness of the blocking member is 1 µm to 500 µm.

18. The adapting member according to claim 1, wherein a thickness ratio of the blocking member to the adapter is 1/10 to 4/5.

19. The adapting member according to claim 1, wherein in a thickness direction of the blocking member, a projection area ratio of the blocking member to the adapter is 1/5 to 4/5.

20. A battery cell, **characterized by** comprising:
a housing provided with an accommodating cavity;
an electrode terminal disposed on the housing;
an electrode assembly accommodated in the accommodating cavity, the electrode assembly comprising a body portion and a tab led out of the body portion; and
an adapting member, wherein the adapting member is the adapting member according to any one of claims 1 to 19, the first connecting portion of the adapter is electrically connected to the electrode terminal, and the second connecting portion is electrically connected to the tab.

21. The battery cell according to claim 20, wherein the tab connecting surface is located on a surface of the second connecting portion facing the electrode assembly.

22. A battery, **characterized by** comprising the battery cell according to claim 20 or 21.

23. An electric apparatus, **characterized by** comprising the battery cell according to claim 20 or 21, wherein the battery cell is configured to supply electrical energy.
